# FASCICULE DE BREVET EUROPEEN

(11) **EP 3 512 808 B1**
(45) Date de publication et mention de la délivrance du brevet: **15.04.2020**
(21) Numéro de dépôt: 17780817.7
(22) Date de dépôt: 15.09.2017
(51) Int. Cl.: C01B 32/21, C01B 32/194, C01B 32/156, C01B 32/168

(54) **PROCEDE DE DOPAGE PAR L'AZOTE DE MATERIAUX SOLIDES**
VERFAHREN ZUM STICKSTOFFDOTIERUNG VON FESTSTOFFMATERIALIEN
METHOD FOR NITROGEN DOPING OF SOLID MATERIALS

(30) Priorité: 15.09.2016 FR 1658615
(43) Date de publication de la demande: 24.07.2019
(73) Titulaire: Centre National de la Recherche Scientifique, 75016 Paris (FR); Ecole Polytechnique, 91120 Palaiseau (FR); Commissariat à l'Énergie Atomique et aux Énergies Alternatives, 75015 Paris (FR)
(72) Inventeur: CORBEL, Catherine, 92340 Le Plessis-Robinson (FR); SHCHEDRINA, Irina, 91120 Palaiseau (FR); RENAULT, Jean-Philippe, 91300 Massy (FR)
(74) Mandataire: Novagraaf Technologies
(86) Numéro de dépôt international: PCT/FR2017/052474
(87) Numéro de publication internationale: WO 2018/051037

(56) Documents cités:
- WANG L ET AL: "A facile method to modify carbon nanotubes with nitro/amino groups", APPLIED SURFACE SCIENCE, ELSEVIER, AMSTERDAM, NL, vol. 256, no. 20, 1 août 2010 (2010-08-01) , pages 6060-6064, XP027076740, ISSN: 0169-4332, DOI: 10.1016/J.APSUSC.2010.03.120 [extrait le 2010-06-04]
- YANG YANG ET AL: "Experimental and theoretical investigations of nitro-group doped porous carbon as a high performance lithium-ion battery anode", JOURNAL OF MATERIALS CHEMISTRY A ROYAL SOCIETY OF CHEMISTRY UK, vol. 3, no. 36, 28 septembre 2015 (2015-09-28), pages 18657-18666, XP002769796, ISSN: 2050-7488
- DATABASE WPI Week 201620 Thomson Scientific, London, GB; AN 2015-65562E XP002769797, & CN 104 891 476 A (UNIV SHANGHAI) 9 septembre 2015 (2015-09-09)
- LI-XIANG LI ET AL: "The effect of carbonyl, carboxyl and hydroxyl groups on the capacitance of carbon nanotubes", NEW CARBON MATERIALS, vol. 26, no. 3, 1 juin 2011 (2011-06-01), pages 224-228, XP055496071, AMSTERDAM, NL ISSN: 1872-5805, DOI: 10.1016/S1872-5805(11)60078-4
- ZHANG LIANG ET AL: "Simultaneous reduction and N-doping of graphene oxides by low-energy N2+ion sputtering", CARBON, vol. 62, 14 juin 2013 (2013-06-14), pages 365-373, XP028678201, ISSN: 0008-6223, DOI: 10.1016/J.CARBON.2013.06.018
- DONGHUI LONG ET AL: "Preparation of Nitrogen-Doped Graphene Sheets by a Combined Chemical and Hydrothermal Reduction of Graphene Oxide", LANGMUIR, vol. 26, no. 20, 19 octobre 2010 (2010-10-19), pages 16096-16102, XP055187760, ISSN: 0743-7463, DOI: 10.1021/la102425a
- LIN ET AL: "Surface characterization of ion beam modified graphite", CARBON, ELSEVIER, OXFORD, GB, vol. 31, no. 3, 1 janvier 1993 (1993-01-01), pages 509-517, XP024030527, ISSN: 0008-6223, DOI: 10.1016/0008-6223(93)90141-V [extrait le 1993-01-01]

## Description

La présente invention concerne un procédé de dopage par l'azote de matériaux solides, ces matériaux comprenant ou étant constitués d'un ensemble d'atomes de carbone à l'état d'hybridation sp².

La découverte du graphène et de ses propriétés exceptionnelles, notamment celles de transport électronique bidimensionnel, a donné lieu à des recherches très actives sur ce matériau. L'une de ces voies de recherche vise à modifier les propriétés électroniques du graphène dans le cadre de son utilisation dans divers dispositifs.

L'une des façons de modifier les propriétés électroniques du graphène est le dopage, généralement effectué en substituant des atomes de carbone par d'autres éléments. À ce jour, l'azote est l'un des dopants les plus étudiés dans le cas du graphène. Il a été démontré que le dopage à l'azote améliore de façon remarquable les performances du graphène, notamment dans les batteries lithium-ion, les supercondensateurs, les piles à combustible, et les transistors à effet de champ.

Le dopage à l'azote est également avantageux en ce qui concerne d'autres matériaux constitués d'atomes de carbone à l'état d'hybridation sp², comme par exemple le graphite ou les nanotubes de carbone.

Le dopage à l'azote du graphène peut se faire par voie chimique, par exemple par traitement thermique d'oxyde de graphène en présence d'ammoniac (Xu et al., Journal of Colloid and Interface Science 2015, 445, 143-150) ou d'un composé organique comprenant de l'azote (Liu et al., Energy Storage Materials 2016, 2, 69-75), ou par chauffage d'un précurseur de graphène dopé à l'azote, comme la pyridine ou la julolidine (Yasuda et al., ChemComm 2013, 49, 9627). Le dopage de nanotubes de carbone par des groupes NO₂/NH₃ a été proposé par traitement à partir d'un mélange d'acides nitrique et sulfurique concentrés (Li Wang et al., Applied Surface Science 2010, 256, 6060-6064). Toutefois, ces procédés font appel à des hautes températures et des composés chimiques toxiques, les rendant ainsi peu attractifs d'un point de vue économique et écologique.

Le dopage à l'azote du graphène peut également être effectué par exposition du graphène à des ions N⁺ et/ou à des espèces neutres thermalisées de l'azote, le graphène étant lors de cette exposition porté à haute température (par exemple 850°C) (Lin et al., Carbon 2014, 73, 216-224) ou traité thermiquement après l'exposition à des températures supérieures à 700°C (Sforzini et al., Physical Review Letters 2016, 116, 126805), ou de 550°C voire 850°C (Lin et al., Carbon 2016, 100, 337-344). Toutefois, ces procédés font là encore appel à des hautes températures, les rendant ainsi peu attractifs d'un point de vue économique. De plus, ces derniers ne sont pas versatiles, l'azote étant apporté par des ions N⁺ et/ou des espèces neutres thermalisées de l'azote, et non par une atmosphère gazeuse facilement modifiable. En outre, ces méthodes sont susceptibles de provoquer des défauts importants au sein du graphène, lesquels peuvent être pénalisants pour les applications ultérieures.

Ainsi, l'un des objectifs de la présente invention est de fournir un procédé de dopage à l'azote d'un matériau comprenant des atomes de carbone à l'état d'hybridation sp² qui soit simple à mettre en œuvre et propre, c'est-à-dire n'impliquant pas l'utilisation de composés chimiques toxiques.

Un autre but de la présente invention est de fournir un procédé de dopage à l'azote où la production de défauts dans le matériau irradié est de nature sélective et limitée.

Un autre but de la présente invention est de fournir un procédé de dopage à l'azote qui soit versatile, permettant également, le cas échéant, la fonctionnalisation du matériau via la formation de liaisons carbone-oxygène, en particulier de groupes carboxyle et/ou carbonyle.

Aussi, un premier objet de l'invention concerne un procédé de dopage à l'azote d'un matériau comprenant ou constitué d'un ensemble d'atomes de carbone à l'état d'hybridation sp², ledit procédé comprenant les étapes suivantes :
a) la mise en contact dudit matériau avec du diazote ;
b) l'irradiation du matériau et du diazote mis en contact par un faisceau d'électrons ou d'ions légers dont l'énergie est supérieure ou égale à 0,1 MeV, pour obtenir un matériau dont tout ou partie de l'ensemble d'atomes de carbone à l'état d'hybridation sp² est dopé à l'azote ;
le matériau n'étant pas oxydé préalablement à l'étape a).

De façon surprenante, les Inventeurs ont remarqué que le procédé de l'invention permet un dopage efficace du matériau, tout en étant simple à mettre en œuvre et propre, dans des conditions non pénalisantes pour ce matériau.

Par exemple, un matériau à base de graphite dopé à l'azote obtenu par le procédé selon l'invention a été testé en tant qu'électrode redox vis à vis des couple redox vanadium utilisés pour des batteries rechargeables à flux de type à oxydoréduction au vanadium. Il s'avère que les vitesses d'échange des électrons sont modifiées de manière remarquable à la fois pour les réactions d'oxydation et de réduction.

En outre, il a été montré que le dopage selon l'invention est susceptible de modifier le travail de sortie des électrons du matériau, en particulier d'augmenter le travail de sortie des électrons du matériau irradié, notamment par rapport au matériau recuit à haute température (par exemple 10 min à 450°C , sous ultravide). Le contrôle du travail de sortie des électrons peut être avantageux pour l'optimisation de composants électroniques tels que transistors, cellules photovoltaïques, détecteurs chimiques, détecteurs à gaz, émetteurs à effet de champ.

Selon un mode de réalisation, la mise en contact a) du matériau se fait avec un mélange gazeux constitué ou comprenant du diazote, en particulier un mélange gazeux constitué ou comprenant de l'air.

Ainsi, la mise en contact dudit matériau avec le diazote se fait en l'absence de toute solution, le diazote étant uniquement apporté sous forme de gaz, pur ou en mélange avec d'autres gaz.

Le procédé de l'invention est, en l'absence de toute solution, avantageusement simple à mettre en œuvre, étant donné qu'aucune solution n'est à préparer, et qu'aucune étape de séchage du matériau dopé n'est à prévoir à l'issue de l'irradiation.

Selon un mode de réalisation avantageux, ledit mélange gazeux est constitué ou comprend du diazote et un gaz choisi parmi le dioxygène, le dioxyde de carbone, le dihydrogène, l'hélium, le néon, l'argon, le krypton, le xénon, la vapeur d'eau, et leurs mélanges.

Dans ce cas, le matériau est en contact avec :
- du diazote (comme seul gaz), ou
- un mélange gazeux comprenant du diazote, ou
- un mélange gazeux constitué de diazote et d'un autre gaz tel que défini ci-dessus, ou
- un mélange gazeux comprenant du diazote et un autre gaz tel que défini ci-dessus.

Selon un autre mode de réalisation avantageux, ledit mélange gazeux est constitué ou comprend du diazote et éventuellement un gaz choisi parmi le dihydrogène, l'hélium, le néon, l'argon, le krypton, le xénon et leurs mélanges.

Ainsi, le matériau peut être en contact avec :
- du diazote (comme seul gaz), ou
- un mélange gazeux comprenant du diazote, ou
- un mélange gazeux constitué de diazote et d'un autre gaz tel que défini ci-dessus, ou
- un mélange gazeux comprenant du diazote et un autre gaz tel que défini ci-dessus.

Dans le cas du diazote (comme seul gaz) ou d'un mélange gazeux constitué de diazote et d'un autre gaz choisi parmi le dihydrogène, l'hélium, le néon, l'argon, le krypton, le xénon et leurs mélanges, le dopage par l'azote peut être réalisé sans que le matériau soit fonctionnalisé par des liaisons carbone oxygène.

Selon un autre mode de réalisation avantageux, ledit mélange gazeux est constitué ou comprend de l'air et/ou de la vapeur d'eau, et éventuellement un gaz choisi parmi le dioxygène, le dioxyde de carbone, le dihydrogène, l'hélium, le néon, l'argon, le krypton, le xénon et leurs mélanges.

Dans ce cas, ledit mélange gazeux permet, outre le dopage par l'azote, la fonctionnalisation du matériau par des liaisons carbone oxygène.

Cette fonctionnalisation est avantageuse notamment dans le cadre de l'utilisation dudit matériau pour la réalisation d'électrodes de type redox, de dispositifs de stockage de l'hydrogène, ainsi qu'en catalyse. Cette fonctionnalisation est aussi avantageuse pour des électrodes transparentes (photovoltaïques) et pour les supercondensateurs (batteries).

Selon un mode de réalisation particulièrement avantageux, la mise en contact a) du matériau se fait avec un mélange gazeux constitué ou comprenant de l'hélium et de l'air.

Selon un mode de réalisation particulièrement avantageux, la mise en contact a) du matériau se fait avec un mélange gazeux constitué ou comprenant du diazote.

Selon un mode de réalisation particulièrement avantageux, la mise en contact a) du matériau se fait avec un mélange gazeux constitué ou comprenant du diazote et de l'air.

Selon un mode de réalisation particulièrement avantageux, la mise en contact a) du matériau se fait avec un mélange gazeux constitué ou comprenant du diazote et du dihydrogène.

Selon un autre mode de réalisation particulièrement avantageux, la mise en contact a) du matériau se fait avec un mélange gazeux constitué ou comprenant du diazote et de la vapeur d'eau, en particulier de la vapeur d'eau saturée.

Selon un autre mode de réalisation particulièrement avantageux, la mise en contact a) du matériau se fait avec un mélange gazeux constitué ou comprenant de l'air et de la vapeur d'eau, en particulier de la vapeur d'eau saturée.

Selon un mode de réalisation, ledit mélange gazeux comprend en outre un gaz choisi parmi le dioxyde de soufre, l'hydrogène sulfuré, le méthane, le propane, le butane, l'éthylène, le propène, le butène, l'acétylène, le propyne, le butyne, le trifluorure d'azote, le trifluorure de méthane, l'hexafluorure de soufre, le protoxyde d'azote, les gaz halogénés, notamment le dichlore, les gaz siliciés, les vapeurs de composés organométalliques, et leurs mélanges.

Par « gaz siliciés », on entend tout gaz contenant du silicium, par exemple SiH₄.

Les vapeurs de composés organométalliques peuvent être obtenues par toute méthode connue de l'homme du métier, en particulier celles utilisées dans le cadre de l'épitaxie en phase vapeur aux organométalliques.

Ces gaz peuvent permettre en outre de fonctionnaliser l'ensemble d'atomes de carbone à l'état d'hybridation sp², par des liaisons carbone soufre, carbone fluor, ou autres.

Selon un mode de réalisation, ledit ensemble d'atomes de carbone à l'état d'hybridation sp² est choisi parmi le graphène, le graphite, les nanotubes de carbones, les fullerènes et les fullerites, ledit ensemble étant en particulier le graphène ou le graphite.

Selon un mode de réalisation, ledit ensemble d'atomes de carbone à l'état d'hybridation sp² est supporté par un substrat.

Lorsque ledit ensemble d'atomes de carbone à l'état d'hybridation sp² est du graphène supporté par un substrat, le substrat porte en particulier une ou plusieurs monocouches de graphène, notamment de 1 à 7 monocouches de graphène.

Selon un mode de réalisation, le substrat est choisi parmi les métaux, en particulier Ni, les semi-conducteurs et les isolants, en particulier SiO₂, les verres et les polymères.

Selon un mode de réalisation, l'ensemble d'atomes de carbone à l'état d'hybridation sp² est supporté par un substrat, en particulier SiO₂, et l'ensemble d'atomes de carbone à l'état d'hybridation sp² dopé à l'azote, obtenu à l'issue de l'étape b), est également dopé à au moins l'un des atomes du support, en particulier Si.

Selon un mode de réalisation, ledit ensemble d'atomes de carbone à l'état d'hybridation sp² est sous forme de poudre.

Ladite poudre, notamment de graphène ou de graphite, peut être préparée par les techniques de réduction en poudre bien connues de l'homme du métier.

Selon un mode de réalisation, l'énergie du faisceau d'électrons ou d'ions légers est supérieure ou égale à 0,2 ; 0,3 ou 0,4 MeV.

Selon un mode de réalisation, ledit faisceau est un faisceau d'électrons.

Selon un mode de réalisation particulier, les électrons ont une énergie allant de 0,1 à 10 MeV, en particulier de 0,1 à 5 MeV ou de 0,4 à 5 MeV, plus particulièrement de 0,4 à 2,5 MeV, encore plus particulièrement de 1,0 à 2,5 MeV, le dit ensemble d'atomes de carbone à l'état d'hybridation sp² étant notamment supporté par un substrat.

Selon un autre mode de réalisation particulier, les électrons ont une énergie allant de 2,5 à 10 MeV, ledit ensemble d'atomes de carbone à l'état d'hybridation sp² étant notamment supporté par un substrat ou sous forme de poudre.

Selon un mode de réalisation, ledit faisceau est un faisceau d'ions légers.

Selon un mode de réalisation avantageux, les ions légers sont choisis parmi H⁺ et He⁺.

Selon un autre mode de réalisation avantageux, les ions légers ont une énergie allant de 0,1 MeV à 45 MeV, en particulier de 0,4 MeV à 45 MeV.

Selon un mode de réalisation, la durée de l'irradiation de l'étape b) va de 1 minute à 72 heures, en particulier de 5 minutes à 14 ou 15 heures.

La variation de la durée d'irradiation permet d'obtenir un dopage d'azote dans une large gamme de pourcentage.

Selon un mode de réalisation, le flux du faisceau d'électrons va de 3.10¹¹ à 4.10¹³ e-.cm⁻².s⁻¹, en particulier de 1,4.10¹² à 1,9.10¹³ e-.cm⁻².s⁻¹.

Selon un mode de réalisation, le flux du faisceau d'ions légers va de 3.10⁷ à 6.10¹¹ e-.cm⁻².s⁻¹.

Selon un mode de réalisation, la fluence du faisceau d'électrons ou d'ions légers va de 1,8 10⁹ à 10¹⁹ e-.cm⁻², en particulier de 6,7.10¹⁵ à 7,2.10¹⁶ e-.cm⁻².

Selon un mode de réalisation, l'invention concerne un procédé tel que défini précédemment, dans lequel, lors de l'irradiation b), le faisceau irradie le diazote, puis le matériau comprenant ou constitué d'un ensemble d'atomes de carbone à l'état d'hybridation sp².

Dans ce cas, le faisceau d'électrons rencontre tout d'abord le diazote, notamment sous forme de gaz, puis frappe le matériau et ensuite, le cas échéant, le substrat.

Selon un autre mode de réalisation, l'invention concerne un procédé tel que défini précédemment, dans lequel, lors de l'irradiation b), le faisceau irradie le matériau comprenant ou constitué d'un ensemble d'atomes de carbone à l'état d'hybridation sp², puis le diazote.

Dans ce cas, le faisceau d'électrons rencontre tout d'abord, le cas échéant, le substrat, puis le matériau et ensuite le diazote, notamment sous forme de gaz.

Selon un autre mode de réalisation, l'invention concerne un procédé tel que défini précédemment, dans lequel le pourcentage atomique d'azote dudit ensemble d'atomes de carbone à l'état d'hybridation sp² dopé à l'azote est supérieur ou égal à 0,5 % at, en particulier supérieur ou égal à 1,0 % at.

Selon un mode de réalisation avantageux, l'invention concerne un procédé tel que défini précédemment, dans lequel le pourcentage atomique d'azote dudit ensemble d'atomes de carbone à l'état d'hybridation sp² dopé à l'azote est supérieur ou égal à 2,5 % at, en particulier supérieur ou égal à 3,0 % at, 3,5 % at, ou 4,0 % at, ledit mélange gazeux comprenant en particulier du diazote et de la vapeur d'eau.

Ainsi, le procédé selon l'invention permet un dopage efficace du matériau, tout en étant simple à mettre en œuvre et propre, et dans des conditions non pénalisantes pour ce matériau.

Selon un autre mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme d'azotes pyrroliques, d'azotes N-oxyde pyridiniques, d'azote de type N-pyridone, de groupes nitro -NO₂, de groupes nitroso -N=O, et/ou de groupes nitrates -O-NO₂, ledit mélange gazeux comprenant en particulier de l'hélium et de l'air.

Selon un mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme de groupes nitro -NO₂, et/ou de groupes nitrates -O-NO₂, ledit mélange gazeux comprenant en particulier du diazote et de la vapeur d'eau.

Selon un mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme de groupes nitro -NO₂, et/ou de groupes nitrates -O-NO₂, ledit mélange gazeux comprenant en particulier de l'air et de la vapeur d'eau, plus particulièrement de la vapeur d'eau saturée.

Selon un mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme de groupes nitro -NO₂, et/ou de groupes nitrates -O-NO₂, ledit mélange gazeux comprenant en particulier du diazote et de l'air.

Selon un autre mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme d'azotes pyrroliques et/ou d'azote de type N-pyridone, ledit mélange gazeux comprenant en particulier du diazote et de la vapeur d'eau, plus particulièrement de la vapeur d'eau saturée.

Selon un autre mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme d'azotes pyrroliques et/ou d'azote de type N-pyridone, ledit mélange gazeux comprenant en particulier du diazote et du dihydrogène.

Selon un autre mode de réalisation, l'invention concerne un procédé tel que défini précédemment, dans lequel le dopage comprend l'incorporation d'atomes d'azote dans ledit ensemble d'atomes de carbone à l'état d'hybridation sp² sous la forme d'azotes pyrroliques, d'azote de type N-pyridone, de groupes nitro -NO₂, et/ou de groupes nitrates -O-NO₂, ledit mélange gazeux comprenant ou étant constitué en particulier de diazote.

Selon un mode de réalisation, l'ensemble d'atomes de carbone à l'état d'hybridation sp² dopé à l'azote, obtenu à l'issue de l'étape b), est également fonctionnalisé par des groupes comprenant de l'oxygène, en particulier des groupes comprenant une ou plusieurs liaisons carbone oxygène, plus particulièrement des groupes carboxyle et/ou carbonyle.

Le matériau obtenu par le procédé selon l'invention comprend ou est constitué d'un ensemble d'atomes de carbone à l'état d'hybridation sp², dont tout ou partie de l'ensemble d'atomes de carbone à l'état d'hybridation sp² est dopé à l'azote, et dans lequel:
- le pourcentage atomique d'azote dudit ensemble d'atomes de carbone à l'état d'hybridation sp² dopé à l'azote est supérieur ou égal à 0,5 % at, en particulier supérieur ou égal à 1,0 % at ou 1,2 % at; et
- le pourcentage atomique d'azote dudit ensemble d'atomes de carbone à l'état d'hybridation sp² dopé à l'azote sous la forme de groupes nitro -NO₂, et/ou de groupes nitrates -O-NO₂ est supérieur ou égal à 0,1 % at, en particulier supérieur ou égal à 0,3 % at ou 0,4 % at.

Selon un mode de réalisation, ce matériau est tel que
- le pourcentage atomique d'azote dudit ensemble d'atomes de carbone à l'état d'hybridation sp² dopé à l'azote est supérieur ou égal à 1,5 % at, en particulier supérieur ou égal à 2,5 % at ou 4,0 % at; et
- le pourcentage atomique d'azote dudit ensemble d'atomes de carbone à l'état d'hybridation sp² dopé à l'azote sous la forme groupes nitro -NO₂, et/ou de groupes nitrates - O-NO₂ est supérieur ou égal à 1,3 % at, en particulier supérieur ou égal à 2,0% at ou 3,0 % at.

Selon un mode de réalisation, ledit ensemble d'atomes de carbone à l'état d'hybridation sp² est choisi parmi le graphène, le graphite, les nanotubes de carbones, les fullerènes et les fullerites, ledit ensemble étant en particulier le graphène ou le graphite.

Selon un mode de réalisation, ledit ensemble d'atomes de carbone à l'état d'hybridation sp² est supporté par un substrat.

Lorsque ledit ensemble d'atomes de carbone à l'état d'hybridation sp² est du graphène supporté par un substrat, le substrat porte en particulier une ou plusieurs monocouches de graphène, notamment de 1 à 7 monocouches de graphène.

Selon un mode de réalisation, le substrat est choisi parmi les métaux, en particulier Ni, les semi-conducteurs et les isolants, en particulier SiO₂, les verres et les polymères.

Selon un mode de réalisation, l'ensemble d'atomes de carbone à l'état d'hybridation sp² est supporté par un substrat, en particulier SiO₂, et l'ensemble d'atomes de carbone à l'état d'hybridation sp² dopé à l'azote, obtenu à l'issue de l'étape b), est également dopé à au moins l'un des atomes du support, en particulier Si.

Selon un mode de réalisation, ledit ensemble d'atomes de carbone à l'état d'hybridation sp² est sous forme de poudre.

Selon un mode de réalisation, l'ensemble d'atomes de carbone à l'état d'hybridation sp² dopé à l'azote, obtenu à l'issue de l'étape b), est également fonctionnalisé par des groupes comprenant de l'oxygène, en particulier des groupes comprenant une ou plusieurs liaisons carbone oxygène, plus particulièrement des groupes carboxyle et/ou carbonyle.

### Définitions

Par « ensemble d'atomes de carbone à l'état d'hybridation sp² », on entend un ensemble dans lequel chaque atome de carbone, à l'exception des atomes de carbone au bord de cet ensemble, est lié à trois autres atomes de carbone par des liaisons covalentes de type sigma pour ses 3 électrons sp², et des liaisons covalentes de type π pour son autre électron p.

L'ensemble peut en outre présenter des défauts, bien connus de l'homme du métier. Dans ce cas, il existe par exemple des atomes de carbone non liés à trois autres atomes de carbone. Ils peuvent alors être liés à quatre atomes de carbone (hybridation sp³).

Cet ensemble peut également être dopé et/ou fonctionnalisé comme mentionné plus haut et défini ci-après.

Par « dopage à l'azote », on entend l'incorporation d'atomes d'azote dans ledit ensemble d'atomes de carbone à l'état d'hybridation sp².

L'incorporation est par exemple la substitution directe d'un atome de carbone par un atome d'azote. On parle alors d'azote graphitique. Cette incorporation peut également être faite par liaison d'un atome d'azote à deux atomes de carbone pour former un cycle de 6 atomes ou 5 atomes. On parle alors respectivement d'azote pyridinique et pyrrolique.

Par « la mise en contact dudit matériau avec du diazote », on entend la mise en contact d'au moins l'ensemble d'atomes de carbone à l'état d'hybridation sp² dudit matériau avec du diazote, en particulier sous forme de gaz.

Par « l'irradiation du matériau », on entend l'irradiation d'au moins tout ou partie dudit ensemble d'atomes de carbone à l'état d'hybridation sp².

Par « l'irradiation du matériau et du diazote mis en contact», on entend que ladite mise en contact de l'étape a) se poursuit lors de l'étape b), et qu'à la fois le matériau et le diazote sont irradiés lors de cette étape b).

Par « le matériau n'étant pas oxydé préalablement à l'étape a)», on entend notamment que ledit matériau comprenant ou constitué d'un ensemble d'atomes de carbone à l'état d'hybridation sp² n'est pas un matériau comprenant ou constitué d'oxyde de graphène avant l'étape a) de mise en contact avec du diazote.

Par « fonctionnalisation par des liaisons carbone oxygène », on entend que certains atomes de carbone dudit ensemble portent une liaison carbone-oxygène. En particulier, certains atomes de carbone dudit ensemble portent alors un groupe carbonyle ou carboxyle.

Par « irradiation par un faisceau d'électrons ou d'ions légers », on entend en particulier une irradiation en mode fixe. Une zone d'irradiation est par exemple définie sur le matériau à doper, l'irradiation est effectuée sur une partie de cette zone, en mode fixe, dans les conditions, notamment de durée, définies dans la présente description, puis une nouvelle partie de ladite zone est éventuellement irradiée. Cette dernière étape est éventuellement reproduite jusqu'à irradiation de la totalité de la zone d'irradiation considérée.

Par « le matériau n'étant pas oxydé préalablement à l'étape a) », on entend notamment que le matériau soumis aux étapes a) et b) n'est pas de l'oxyde de graphène.

Par « flux », on entend le nombre d'électrons ou d'ions légers par unité de temps et par unité de surface.

Par « fluence », on entend le nombre total d'électrons ou d'ions légers par unité de surface.

Par « vapeur d'eau saturée », on entend de la vapeur d'eau à une pression P correspondant à la pression de vapeur saturante. Cette vapeur d'eau saturée est humide lorsqu'elle est en présence d'eau liquide, et sèche dans le cas contraire.

### FIGURES

La **figure 1** illustre la résolution des différentes composantes des pics XPS de l'azote, Nls-1, Nls-2, Nls-3, déterminée à partir des données XPS obtenues pour du graphène sur substrat Ni (Graphene Supermarket) irradié à la même énergie des électrons, 2.5 MeV, au même flux (xl) et à la même fluence (x14), à savoir G8 (exemple 2, figure 1A) et G9 (exemple 1, figure 1B). L'épaisseur du graphène sur le substrat Ni varie de 1 à 7 couches sur des domaines d'environ 2 à 5 µm (Graphene Supermarket).
La **figure 2** présente l'analyse de la distribution des énergies de liaison des photoelectrons obtenue à partir des données de spectroscopie de photoelectrons (XPS) des échantillons E3(2), A3(2) et G1(2) de l'exemple 7.
La **figure 3** présente l'analyse de la distribution des énergies de liaison des , photoelectrons obtenue à partir des données de spectroscopie de photoelectrons (XPS) des échantillons E3(2) et E5(2) et G1(2) de l'exemple 7.
La **figure 4** présente l'analyse de la distribution des énergies de liaison des photoelectrons obtenue à partir des données de spectroscopie de photoelectrons (XPS) des échantillons E1(2) et A5(2) et E9(2) de l'exemple 7.

### EXEMPLES

### Matériels et Méthodes

### Matériels

Le graphène sur substrat Ni provient de Graphene Supermarket (Graphene Laboratories Inc.) ; il s'agit d'échantillons de 10mm x 10 mm. Celui sur substrat SiO₂ provient de Graphenea (Graphena Monolayer Graphene film).

Les irradiations par faisceau d'électrons ont été effectuées à l'aide d'un accélérateur Pelletron, fournissant des électrons de forte énergie (150 keV - 2.5 MeV) et à courant variable (150 nA - 200 µA), et fabriqué par la société NEC. Les irradiations avec un faisceau d'électrons dans la gamme 2,5 -10 MeV sont effectuées avec un LINAC de 10 MeV.

Les irradiations avec un faisceau d'ions légers dans la gamme 0,4 - 3 MeV sont effectuées avec un pelletron fabriqué par la société NEC et dans la gamme 3 - 45 MeV avec un cyclotron.

La mesure des pourcentages des éléments à la surface des échantillons irradiés est effectuée par spectrométrie de photoélectrons induits par rayons X (XPS) à l'aide d'un spectromètre THERMO-VG ESCALAB 250 muni d'une source RX K->A1 (1486,6 eV).

### Méthodes

Dans les exemples **1** à **4** qui suivent, la géométrie d'irradiation utilisée est la suivante : le faisceau traverse la couche de gaz en contact avec le graphène sur substrat puis entre dans le graphène puis le substrat. L'irradiation crée des radicaux dans la couche du gaz à la surface ainsi que des défauts dans la structure cristalline de la surface avec destruction partielle des liaisons entre carbone.

Les pourcentages des éléments à la surface des échantillons irradiés sont mesurés par XPS selon un mode opératoire où un pompage de longue durée est effectué sous vide pour conditionner les surfaces. Cette méthode diffère des procédures d'analyse XPS standard qui effectuent un recuit thermique à haute température, environ 450 à 550°C, de courte durée (par exemple 10 min), avant les mesures.

### Détermination du travail d'extraction des électrons

La microscopie à émission des photoélectrons (XPEEM) a été utilisée pour réaliser une analyse spectroscopique en imagerie. En particulier des cartographies du travail d'extraction des électrons ont été déterminées pour une couche de référence de graphène/Ni et d'une couche traitée (G9) en utilisant la procédure décrite par Wang et al. (Carbon 2015, 82, 360-367).

### Exemple 1 : Dopage à l'azote de graphène sur substrat Ni, sous atmosphère hélium/air

Des échantillons de graphène sur substrat Ni ont été irradiés sous atmosphère hélium/air dans les conditions décrites dans le tableau 1 suivant. La pression du mélange est de 1 atm avec une pression partielle de 0,9 atm pour He et de 0,1 atm pour l'air.

Les rapports flux/flux0 du tableau 1 correspondent aux rapports des courants ICE qui permettent de régler le faisceau d'électrons du Pelletron. La valeur flux0 est la valeur nominale du nombre d'électrons émis par unité de temps et de surface pour le courant ICE minimal utilisé dans les présents essais, et est indiquée pour chaque essai dans le tableau 1. La valeur nominale fluence0 correspond à une irradiation de durée une heure pour un flux d'électrons de valeur flux0.

Les valeurs de flux sur les couches graphène dépendent du réglage du faisceau d'électrons du Pelletron. La courbe d'étalonnage, Icible=f(ICE), permet de les déterminer à partir des valeurs nominales des flux. Pour les essais réalisés où les valeurs nominales de flux varient dans des rapports de 1 à 10 (tableau 1), les valeurs de flux varient dans des rapports de 1 à 11,9. Les fluences varient dans des rapports de 1 à 10,8 au lieu des rapports de 1 à 14 pour les valeurs nominales (tableau 1).

Les flux utilisés varient dans la gamme (1,4.10¹² à 1,9.10¹³) e-.cm⁻².s⁻¹ et les fluences dans la gamme (6,7.10¹⁵ à 7,2.10¹⁶)e-.cm⁻² (tableaul). Il est possible d'élargir la gamme de flux utilisés, par exemple de (3.10¹¹ à 4.10¹³) e-.cm⁻².s⁻¹.

**Tableau 1 : Liste des échantillons de graphène irradiés avec un faisceau d'électrons émis par le Pelletron, et des conditions d'irradiation correspondantes.**

| Exp. | Tps d'irrad. | MeV | CE/ µA | Flux/Flux0 | Fluence/Fluence0 | Flux0 | Flux | Flux/Fxmin | Fluence | Fluence/Femin |
|---|---|---|---|---|---|---|---|---|---|---|
| | | | | | | e-.cm⁻².s⁻¹ | e-.cm⁻².s⁻¹ | | e-.cm⁻² | |
| G9 | 14h | 2,5 | 1,2 | 1 | 14 | 1,44.10¹² | 1,44.10¹¹ | 1 | 7,27.10¹⁶ | 10,8 |
| E9 | 1+1+1=3h | 1,5 | 1,2 | 1 | 3 | 1,87.10¹² | 1,87.10¹² | 1,29 | 2,01.10¹⁶ | 3 |
| E7 | 6min | 1 | 12 | 10 | 1 | 1,87.10¹³ | 1_{.}87.10¹³ | 12,9 | 6,72.10¹⁵ | 1 |

Les colonnes intitulées « MeV », « CE/µA », « flux/flux0 » et « fluence/fluence0 » indiquent respectivement l'énergie des électrons, le courant du faisceau, si l'irradiation a eu lieu sur toute la couche ou non, le rapport des flux et des fluences d'irradiation aux valeurs nominales les plus basses utilisées. Les colonnes flux, fluence indiquent les valeurs des flux et fluences qui irradient les monocouches de graphène sur substrat. Les colonnes flux/fxmin et fluence/femin indiquent leurs rapports respectifs aux valeurs minimales utilisées dans les essais.

### Résultats

Les pourcentages des éléments à la surface des échantillons irradiés comme indiqué précédemment sont consignés dans le tableau 2 suivant.

**Tableau 2 : pourcentages des éléments à la surface desdits échantillons irradiés déterminé par XPS. G7-ref correspond à un échantillon non irradié de graphène sur substrat Ni.**

| | **XPS : atome (%)** | | | | |
|---|---|---|---|---|---|
| **Exp.** | **C 1s** | **N 1s** | **Ni 2p** | **O 1s** | **Si 2p** |
| G7-ref | 79,54 | 0 | 4,74 | 9,47 | 6,3 |
| G9 | 59,85 | 1,3 | 4,38 | 28,5 | 6 |
| E9 | 69,69 | 0,9 | 3,13 | 20,1 | 6,2 |
| E7 | 71,25 | 0,6 | 3,91 | 19 | 5,3 |

Ainsi, le dopage par l'azote est observé aussi bien pour des électrons de basse énergie 1 MeV que de haute énergie 2.5 MeV dans une gamme de flux qui varie dans un rapport de 1 à 10 et de fluences qui varient dans un rapport 1 à 14.

Ces données montrent qu'il y a également fonctionnalisation du carbone par des groupes comprenant de l'oxygène, en particulier des groupes carboxyle et/ou carbonyle.

### Exemple 2 : Dopage à l'azote de graphène sur substrat Ni, sous atmosphère humide

Des échantillons de graphène sur substrat Ni ont été irradiés sous une atmosphère d'air humidifié par la présence de vapeur d'eau saturée, dans les conditions décrites dans le tableau 3 suivant.

**Tableau 3 : Liste des échantillons de graphène irradiés avec un faisceau d'électrons émis par le Pelletron, et des conditions d'irradiation correspondantes.**

| Exp. | Tps d'irrad. | MeV | CE/ µA | Flux/Flux0 | Fluence/Fluence0 | Flux0 | Flux | Flux/Fxmin | Fluence | Fluence/Femin |
|---|---|---|---|---|---|---|---|---|---|---|
| | | | | | | e-.cm⁻².s⁻¹ | e-.cm⁻².s⁻¹ | | e-.cm⁻² | |
| G8 | 14h | 2,5 | 1,2 | 1 | 14 | 1,44.10¹² | 1,44.10¹² | 1 | 7,27.10¹⁶ | 10,8 |
| E10 | 1+1+1=3h | 1,5 | 1,2 | 1 | 3 | 1,87.10¹² | 1,87.10¹² | 1,29 | 2,01.10¹⁶ | 3 |

### Résultats

Les pourcentages des éléments à la surface des échantillons irradiés comme indiqué précédemment sont consignés dans le tableau 4 suivant.

**Tableau 4: pourcentages des éléments à la surface desdits échantillons irradiés déterminé par XPS**

| | **XPS : atome (%)** | | | | |
|---|---|---|---|---|---|
| **Exp.** | **C 1s** | **N 1s** | **Ni 2p** | **O 1s** | **Si 2p** |
| G7-ref | 79,54 | 0 | 4,74 | 9,47 | 6,3 |
| G8 | 57,56 | 4,2 | 4,59 | 29,1 | 4,6 |
| E10 | 64,02 | 2,6 | 4,63 | 25,6 | 3,1 |

Ainsi, le dopage par l'azote est observé aussi bien pour des électrons d'énergie 1,5 MeV que de haute énergie 2.5 MeV dans une gamme de fluences qui varient dans un rapport 1 à 4,67.

Ces données montrent qu'il y a également fonctionnalisation du carbone par des groupes comprenant de l'oxygène, en particulier des groupes carboxyle et/ou carbonyle.

### Exemple 3 : Dopage à l'azote de graphène sur substrat SiO₂, sous atmosphère hélium/air

Des échantillons de graphène sur substrat SiO₂ ont été irradiés sous atmosphère hélium/air dans les conditions décrites dans le tableau 5 suivant. La pression du mélange est de 1 atm avec une pression partielle de 0.9 atm pour He et de 0.1 atm pour l'air.

**Tableau 5 : Echantillons de graphène irradié avec un faisceau d'électrons émis par le Pelletron, et conditions d'irradiation correspondantes.**

| Exp. | Tps d'irrad. | MeV | CE/ µA | Flux/Flux0 | Fluence/Fluence0 | Flux0 | Flux | Flux/Fxmin | Fluence | Fluence/Femin |
|---|---|---|---|---|---|---|---|---|---|---|
| | | | | | | e-.cm⁻².s⁻¹ | e-.cm⁻².s⁻¹ | | e-.cm⁻² | |
| Gsl | 1+1+1=3h | 1,5 | 1,2 | 1 | 3 | 1,87.10¹² | 1,87.10¹² | 1,29 | 2,01.10¹⁶ | 1 |

### Résultats

Les pourcentages des éléments à la surface de l'échantillon irradié comme indiqué précédemment sont consignés dans le tableau 6 suivant.

**Tableau 6 : pourcentages des éléments à la surface de l'échantillon Gs1 irradié déterminé par XPS**

| | **XPS : atome (%)** | | | | |
|---|---|---|---|---|---|
| **Exp.** | **C 1s** | **N 1s** | **Ni 2p** | **O 1s** | **Si 2p** |
| G7-ref | 79,54 | 0 | 4,74 | 9,47 | 6,3 |
| Gs1 | 26,26 | 1,1 | 0 | 44,7 | 28 |

Ainsi, la quantité d'azote introduite à la surface du graphène sur substrat SiO₂ est proche de celle introduite dans les mêmes conditions à la surface du graphène sur substrat Ni (échantillon E9 de l'exemple 1), montrant la grande polyvalence du procédé de l'invention quant aux substrats portant l'échantillon irradié.

Les données du tableau 6 montrent qu'il y a également fonctionnalisation du carbone par des groupes comprenant de l'oxygène, en particulier des groupes carboxyle et/ou carbonyle.

### Exemple 4 : Configuration des échantillons dopés à l'azote

L'analyse de la distribution des énergies de liaison des photoelectrons obtenue à partir des données de spectroscopie de photoelectrons (XPS) montre que le dopant azote a plusieurs états de liaison qui correspondent aux énergies des gammes (a) 400.2 -400.7, (b) 403.01-403.63 et (c) 407.18-407.59 eV, pour G9 (exemple 1) et G8 (exemple 2).

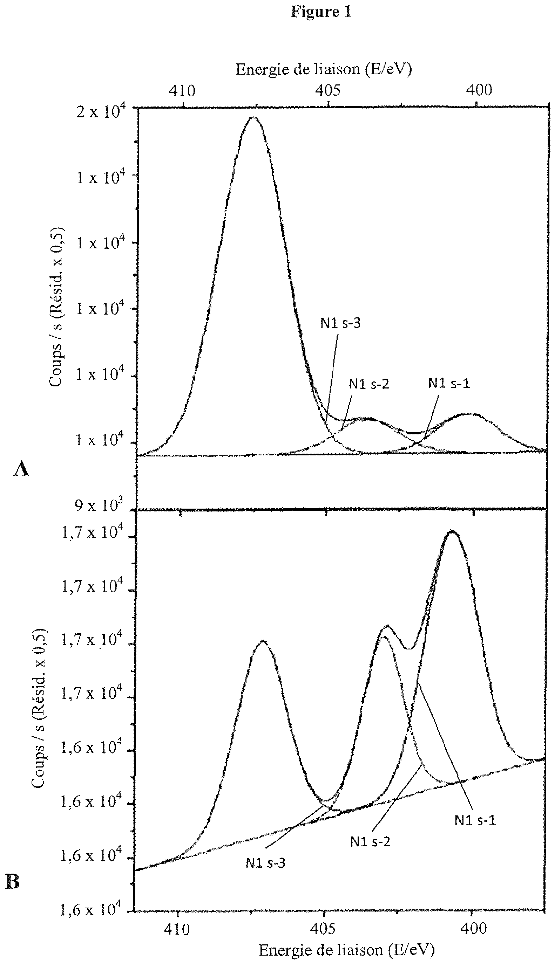

La figure 1 montre que la population des différents types de liaison du dopant azote est fortement dépendante de l'atmosphère (hélium/air ou air humide) mise en contact avec l'échantillon à doper, avant irradiation à 2.5Mev à bas flux (xl) et forte fluence (xl4). L'atmosphère de type air humide favorise quasiment uniquement l'azote Nls-3. L'atmosphère de type hélium/air permet de peupler les trois types de liaison avec une probabilité légèrement plus forte pour N1s-1 que pour N1s-2 et Nls-3.

Le tableau 7 suivant donne le domaine et les valeurs moyennes des énergies de liaison des électrons correspondant aux différentes composantes Nls-n déterminées dans les spectres XPS, ainsi que l'identification de ces composantes.

**Tableau 7**

| **Composante N1s** | **Emin-Emax (dE) en eV** | **E(eV)** | **nature** |
|---|---|---|---|
| N1s-1 | 399.9-400.69 (0,7) | 400,23 | N- pyrrolique ; N-pyridone. |
| N1s-2a | 402.3(0) | 402,30 | N-N. |
| N1s-2b | 403.01-403-63(0,62) | 403,26 | N-pyridine oxyde ; N-nitroso. |
| N1s-3 | 406.83-407.59(0,76) | 407,20 | N-nitro ; N-nitrate |

### Exemple 5 : Dopage à l'azote de graphène avec géométrie d'irradiation modifiée

Dans cet exemple, le faisceau traverse d'abord le substrat, puis le graphène, et arrive finalement dans le gaz en contact avec le graphène.

Des échantillons de graphène sur substrat Ni, Cu, SiO₂, SiC sont irradiés sous atmosphère N₂, N₂/H₂(5%), N₂/vapeur d'eau saturante, N₂/H₂(5%)/vapeur d'eau saturante, N₂/alcène, N₂/alcyne, N₂/H₂S, N₂/O₂, N₂/SO₂, He(0.9atm)/Air(0.1), ou Air(vapeur d'eau saturante) (voir en particulier les exemples 1 et 2) avec des électrons qui ont à l'interface graphène/gaz des énergies dans la gamme 0,4-2,5 MeV pour des conditions de flux et fluence, respectivement dans les gammes (3.10¹¹ à 4.10¹³) e-.cm⁻².s⁻¹ et (1,8.10¹³ à 1.10¹⁹) e-.cm⁻².

### Exemple 6 : Dopage à l'azote de composites graphite

Des disques (diamètre 8-10mm) de composites graphite (PVDF) BMA-5, utilisés dans l'industrie comme éléments de structure dans des piles à combustibles, ont été irradiés en conditions oxydantes sous atmosphère He(0,9atm)/Air(0,1atm), Air(vapeur d'eau saturante), à 1.5 MeV dans des conditions de flux et fluence comparables au graphène , en particulier selon les conditions suivantes :

**Tableau 8**

| Exp. | Tps d'irrad. | MeV | CE/µA | Flux/Flux0 | Fluence/Fluence0 | Flux0 | Flux | Flux/Fxmin | Fluence | Atmosphère |
|---|---|---|---|---|---|---|---|---|---|---|
| | | | | | | e-. cm⁻².s⁻¹ | e-. cm⁻².s⁻¹ | | e-.cm⁻² | |
| BMA-MP_1 5-5 | 3h=1h+ 1h+1h | 1,5 | 1,2 | 1 | 3 | 1,44E+ 12 | 1,44E+ 12 | 1,00E+ 00 | 1,56E+ 16 | He(0.9atm)/ Air(0.1) |
| BMA-MP_1 5-6 | 3h=1h+ 1h+1h | 1,5 | 1,2 | 1 | 3 | 1,44E+ 12 | 1,44E+ 12 | 1,00E+ 00 | 1,56E+ 16 | air + vapeur d'eau |

Ces disques, une fois dopés à l'azote, ont ensuite été testés en tant qu'électrode redox vis à vis des couple redox vanadium utilisés pour des batteries rechargeables à flux de type à oxydoréduction au vanadium. Il s'avère que les vitesses d'échange des électrons sont modifiées de manière remarquable à la fois pour les réactions d'oxydation et de réduction.

### Exemple 7 : Dopage à l'azote de graphène sur substrat Ni, sous différentes atmosphères

Des échantillons de graphène sur substrat Ni ont été irradiés sous une atmosphère telle que décrite dans le tableau 9 suivant, dans les conditions décrites dans le tableau 10 suivant.

| Expérience | Atmosphère |
|---|---|
| A3(2) | H₂ (3%) / N₂ 1,1 bar |
| E3(2) | N₂ 1,1 bar |
| E5(2) | N₂ 0,6 bar ; Air 0,4 bar |
| G1(2) | N₂ 1,1 bar ; vapeur d'eau saturée |
| A5(2) | H₂ (3%) / N₂ 1,1 bar |
| E1(2) | N₂ 1,1 bar |
| E9(2) | N₂ 1,1 bar ; vapeur d'eau saturée |

**Tableau 10 : Liste des échantillons de graphène irradiés avec un faisceau d'électrons émis par le Pelletron, et des conditions d'irradiation correspondantes.**

| Exp. | Tps d'irrad. | MeV | CE/µA | Flux/Flux0 | Flux0 | Flux | Flux/Fxmin | Fluence | Fluence/Femin |
|---|---|---|---|---|---|---|---|---|---|
| | | | | | e-.cm⁻².s⁻¹ | e-.cm⁻².s⁻¹ | | e-.cm⁻² | |
| A3(2) | 1+1+1=3h | 1,5 | 1,2 | 1 | 2.51 10¹² | 2.51 10¹² | 1 | 2.71 10¹⁶ | 3 |
| E3(2) | 1+1+1=3h | 1,5 | 1,2 | 1 | 2.51 10¹² | 2.51 10¹² | 1 | 2.71 10¹⁶ | 3 |
| E5(2) | 1+1+1=3h | 1,5 | 1,2 | 1 | 2.51 10¹² | 2.51 10¹² | 1 | 2.71 10¹⁶ | 3 |
| G1(2) | 1+1+1=3h | 1,5 | 1,2 | 1 | 2.51 10¹² | 2.51 10¹² | 1 | 2.71 10¹⁶ | 3 |
| A5(2) | 14h19 | 1,5 | 1,2 | 1 | 2.51 10¹² | 2.51 10¹² | 1 | 1.30. 10¹⁷ | 14,32 |
| E1(2) | 13h21 | 1,5 | 1,2 | 1 | 2.51 10¹² | 2.51 10¹² | 1 | 1.21. 10¹⁷ | 13,35 |
| E9(2) | 14h28 | 1,5 | 1,2 | 1 | 2.51 10¹² | 2.51 10¹² | 1 | 1,30. 10¹⁷ | 14,47 |

### Résultats

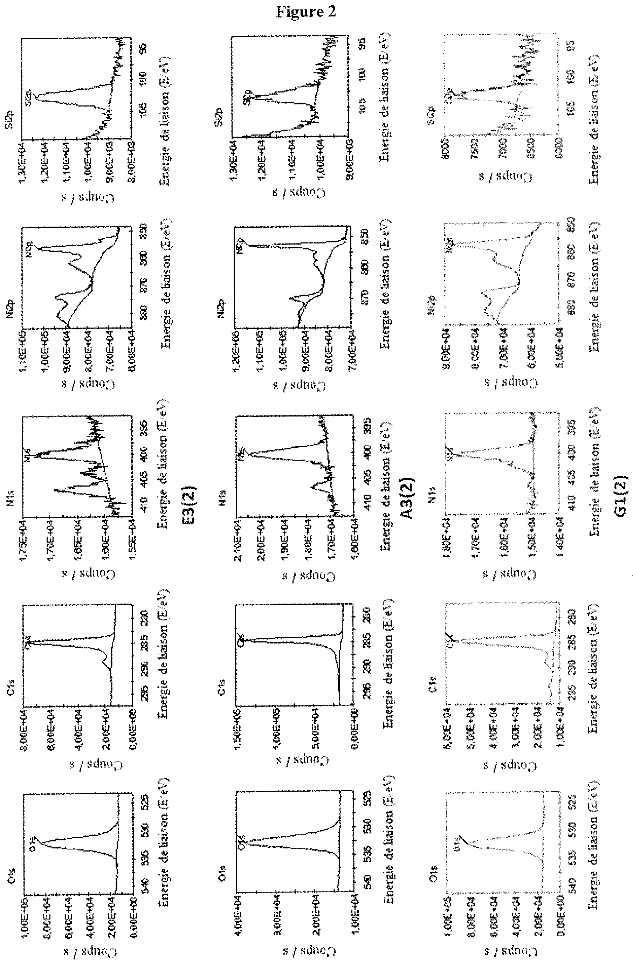

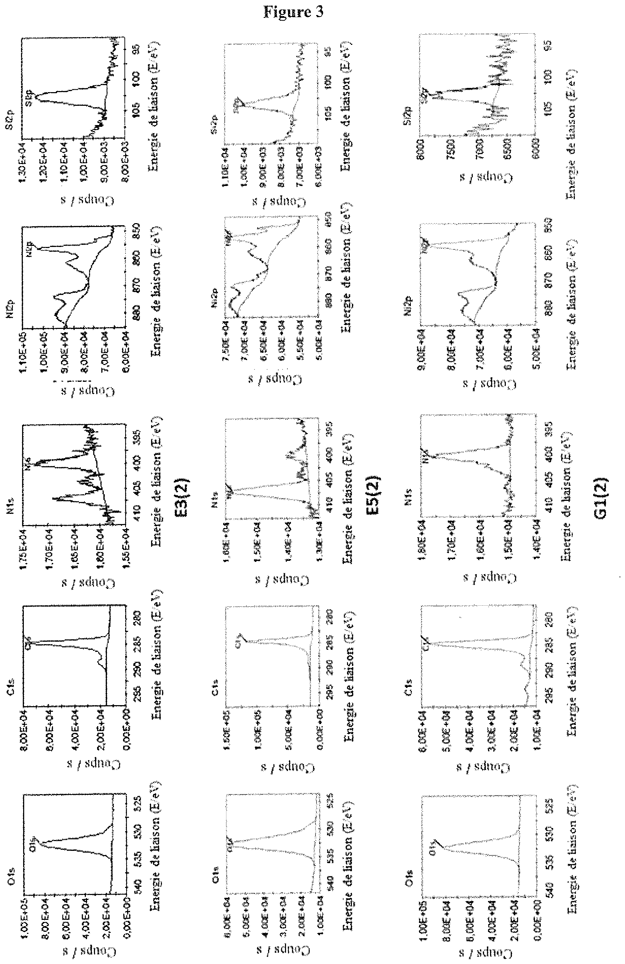

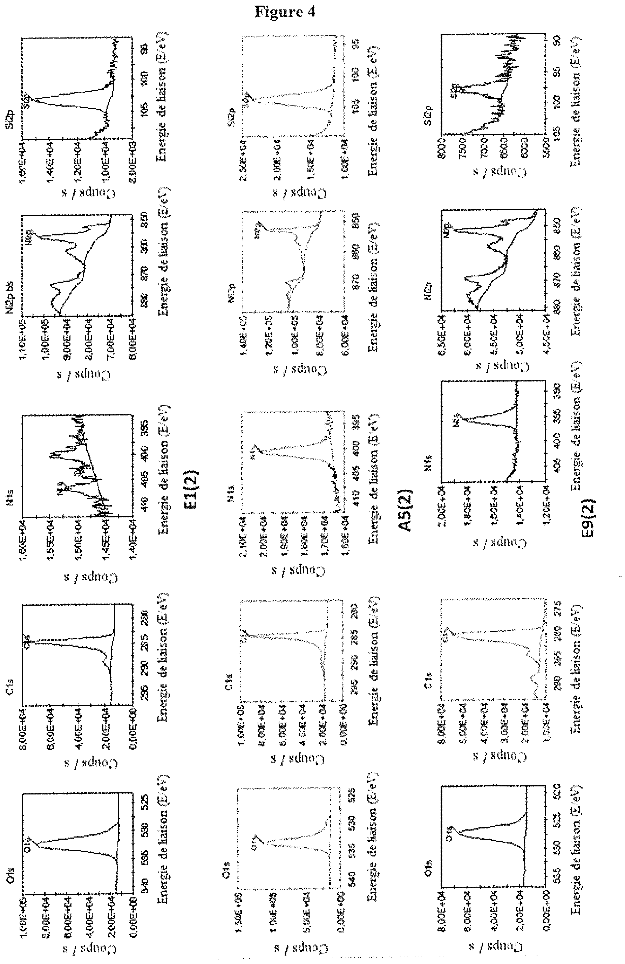

L'analyse de la distribution des énergies de liaison des photoelectrons obtenue à partir des données de spectroscopie de photoelectrons (XPS) des échantillons mentionnés ci-dessus est donnée aux figures 2, 3 et 4.

## Revendications

1. Procédé de dopage à l'azote d'un matériau comprenant un ensemble d'atomes de carbone à l'état d'hybridation sp², ledit procédé comprenant les étapes suivantes :
a) la mise en contact dudit matériau avec du diazote ;
b) l'irradiation du matériau et du diazote mis en contact par un faisceau d'électrons ou d'ions légers dont l'énergie est supérieure ou égale à 0,1 MeV, pour obtenir un matériau dont tout ou partie de l'ensemble d'atomes de carbone à l'état d'hybridation sp² est dopé à l'azote ;
le matériau n'étant pas oxydé préalablement à l'étape a).

2. Procédé selon la revendication 1, dans lequel la mise en contact a) du matériau se fait avec un mélange gazeux comprenant du diazote, en particulier un mélange gazeux comprenant de l'air.

3. Procédé selon la revendication 2, dans lequel ledit mélange gazeux comprend en outre un gaz choisi parmi le dioxygène, le dioxyde de carbone, le dihydrogène, l'hélium, le néon, l'argon, le krypton, le xénon, la vapeur d'eau et leurs mélanges.

4. Procédé selon l'une des revendications 1 à 3, dans lequel la mise en contact a) du matériau se fait avec :
- un mélange gazeux comprenant de l'hélium et de l'air ; ou
- un mélange gazeux comprenant de l'air et de la vapeur d'eau, en particulier de la vapeur d'eau saturée.

5. Procédé selon l'une des revendications 1 à 4, dans lequel ledit ensemble d'atomes de carbone à l'état d'hybridation sp² est choisi parmi le graphène, le graphite, les nanotubes de carbones, les fullerènes et les fullerites, ledit ensemble étant en particulier le graphène ou le graphite.

6. Procédé selon l'une des revendications 1 à 5, dans lequel ledit ensemble d'atomes de carbone à l'état d'hybridation sp2 est supporté par un substrat, notamment choisi parmi les métaux, en particulier Ni, les semi-conducteurs et les isolants, en particulier SiO₂, les verres et les polymères.

7. Procédé selon l'une des revendications 1 à 6, dans lequel ledit ensemble d'atomes de carbone à l'état d'hybridation sp² est sous forme de poudre.

8. Procédé selon l'une des revendications 1 à 7, dans lequel ledit faisceau est un faisceau d'électrons.

9. Procédé selon la revendication 8, dans lequel les électrons ont une énergie allant de 0,1 à 10 MeV, en particulier de 0,4 à 2,5 MeV, plus particulièrement de 1,0 à 2,5 MeV,
ledit ensemble d'atomes de carbone à l'état d'hybridation sp² étant notamment supporté par un substrat.

10. Procédé selon la revendication 8, dans lequel les électrons ont une énergie allant de 2,5 à 10 MeV,
ledit ensemble d'atomes de carbone à l'état d'hybridation sp² étant notamment supporté par un substrat ou sous forme de poudre.

11. Procédé selon l'une des revendications 1 à 7, dans lequel ledit faisceau est un faisceau d'ions légers, notamment choisis parmi H⁺ et He⁺.

12. Procédé selon la revendication 11, dans lequel les ions légers ont une énergie allant de 0,1 MeV à 45 MeV.

13. Procédé selon l'une des revendications 1 à 12, dans lequel la durée de l'irradiation de l'étape b) allant de 1 minute à 72 heures, en particulier de 5 minutes à 15 heures.

14. Procédé selon l'une des revendications 1 à 13, dans lequel :
- le flux du faisceau d'électrons va de 3.10¹¹ à 4.10¹³ e-.cm⁻².s⁻¹ , en particulier de 1,4.10¹² à 1,9.10¹³ e-.cm⁻².s⁻¹ ; ou
- le flux du faisceau d'ions légers va de 3.10⁷ à 6.10¹¹ e-.cm⁻².s⁻¹ ; et/ou
- la fluence du faisceau d'électrons ou d'ions légers va de 1,8.10⁹ à 10¹⁹ e-.cm⁻² , en particulier de 6,7.10¹⁵ à 7,2.10¹⁶ e-.cm⁻².

15. Procédé selon l'une des revendications 1 à 14, dans lequel, lors de l'irradiation b) :
- le faisceau irradie le diazote, puis le matériau comprenant un ensemble d'atomes de carbone à l'état d'hybridation sp² ; ou
- le faisceau irradie le matériau comprenant un ensemble d'atomes de carbone à l'état d'hybridation sp², puis le diazote.

16. Procédé selon l'une des revendications 1 à 15, dans lequel l'ensemble d'atomes de carbone à l'état d'hybridation sp² dopé à l'azote, obtenu à l'issue de l'étape b), est également fonctionnalisé par des liaisons carbone oxygène, en particulier des groupes carboxyle et/ou carbonyle.

## Patentansprüche

1. Verfahren zur Stickstoffdotierung eines Materials umfassend eine Gesamtheit von Kohlenstoffatomen im sp²-Hybridiesierungszustand, wobei das Verfahren die folgenden Schritte umfasst:
a) Inkontaktbringen des Materials mit Stickstoff;
b) Bestrahlung des Materials und des in Kontakt gebrachten Stickstoffes über einen Elektronen- oder Leichtionenstrahl, dessen Energie größer als oder gleich 0,1 MeV ist, um ein Material zu erhalten, von dem alles oder ein Teil der Gesamtheit der Kohlenstoffatome im sp²⁻Hybridiesierungszustand stickstoffdoziert ist;
wobei das Material nicht im Vorfeld in Schritt a) oxidiert wird.

2. Verfahren nach Anspruch 1, wobei das Inkontaktbringen a) des Materials mit einer Stickstoff umfassenden gasförmigen Mischung erfolgt, vornehmlich mit einer Luft umfassenden gasförmigen Mischung.

3. Verfahren nach Anspruch 2, in welchem die gasförmige Mischung weiter ein Gas enthält ausgewählt aus Sauerstoff, Kohlenstoffdioxid, Wasserstoff, Helium, Neon, Argon, Krypton, Xenon, Wasserdampf und deren Mischungen.

4. Verfahren nach einem der Ansprüche 1 bis 3, in welchem das Inkontaktbringen a) des Materials erfolgt mit:
- einer Helium und Luft umfassenden gasförmigen Mischung; oder
- einer Luft und Wasserdampf, insbesondere gesättigten Wasserdampf umfassenden gasförmigen Mischung.

5. Verfahren nach einem der Ansprüche 1 bis 4, in welchem die Gesamtheit der Kohlenstoffatome im sp²⁻Hybridiesierungszustand ausgewählt ist aus Graphen, Graphit, Kohlenstoffröhrchen, Fullerenen und Fulleriten, wobei die Gesamtheit insbesondere aus Graphen oder Graphit besteht.

6. Verfahren nach einem der Ansprüche 1 bis 5, in welchem die Gesamtheit von Kohlenstoffatomen im sp2-Hybridiesierungszustand von einem Substrat getragen wird, insbesondere ausgewählt aus Metallen, insbesondere Ni, Halbleitern und Isolatoren, insbesondere SiO₂, Glas und Polymeren.

7. Verfahren nach einem der Ansprüche 1 bis 6, in welchem die Gesamtheit der Kohlenstoffatome im sp²⁻Hybridiesierungszustand Pulverform aufweist.

8. Verfahren nach einem der Ansprüche 1 bis 7, in welchem der Strahl ein Elektronenstrahl ist.

9. Verfahren nach Anspruch 8, in welchem die Elektronen eine Energie reichend von 0,1 bis 10 MeV aufweisen, vornehmlich von 0,4 bis 2,5 MeV, vornehmlicher von 1,0 bis 2,5 MeV,
wobei die Gesamtheit von Kohlenstoffatomen im sp²⁻Hybridiesierungszustand insbesondere von einem Substrat getragen wird.

10. Verfahren nach Anspruch 8, in welchem die Elektronen eine Energie reichend von 2,5 bis 10 MeV aufweisen,
wobei die Einheit von Kohlenstoffatomen im sp²⁻Hybridiesierungszustand insbesondere durch ein Substrat getragen werden oder Pulverform aufweisen.

11. Verfahren nach einem der Ansprüche 1 bis 7, in welchem der Strahl ein Leichtionenstrahl ist, insbesondere ausgewählt aus H⁺ und He⁺.

12. Verfahren nach Anspruch 11, in welchem die Leichtionen eine Energie reichend von 0,1 MeV bis 45 MeV aufweisen.

13. Verfahren nach einem der Ansprüche 1 bis 12, in welchem die Dauer der Bestrahlung des Schrittes b) von 1 Minute bis 72 Stunden reicht, vornehmlich von 5 Minuten bis 15 Stunden.

14. Verfahren nach einem der Ansprüche 1 bis 13, in welchem:
- der Strom des Elektronenstrahls von 3.10¹¹ bis 4.10¹³ e-.cm⁻².s⁻¹ reicht, bevorzugt von 1,4.10¹² bis 1,9.10¹³ e-.cm⁻².s⁻¹; oder
- der Strom des Leichtionenstrahls von 3.10⁷ bis 6.10¹¹ e-.cm⁻².s⁻¹ reicht; und/oder
- der Fluss des Elektronen- oder Leichtionenstrahls von 1,8.10⁹ bis 10¹⁹ e-.cm⁻² reicht, vornehmlich von 6,7.10¹⁵ bis 7,2.10¹⁶ e-.cm⁻².

15. Verfahren nach einem der Ansprüche 1 bis 14, in welchem bei der Bestrahlung b):
- der Strahl Stickstoff, dann das Material umfassend eine Gesamtheit von Kohlenstoffatomen im sp²⁻Hybridiesierungszustand ausstrahlt; oder
- der Strahl das Material umfassend eine Gesamtheit von Kohlenstoffatomen im sp²-Hybridiesierungszustand, dann den Stickstoff ausstrahlt.

16. Verfahren nach einem der Ansprüche 1 bis 15, in welchem die stickstoffdotierte Gesamtheit von Kohlenstoffatomen im sp²-Hybridiesierungszustand, infolge von Schritt b) gewonnen, gleichfalls durch Kohlenstoff-Sauerstoff-Verbindungen funktionalisiert wird, vornehmlich durch Carboxyl- und/oder Carbonylgruppen.

## Claims

1. A process for the nitrogen doping of a material comprising a set of carbon atoms in the sp² hybridization state, said process comprising the following steps:
a) placing said material in contact with dinitrogen;
b) irradiating the material and the dinitrogen placed in contact with a beam of electrons or of light ions whose energy is greater than or equal to 0.1 MeV, to obtain a material in which all or some of the carbon atoms in the sp² hybridization state is nitrogen-doped;
the material not being oxidized beforehand in step a).

2. The process as claimed in claim 1, in which the placing in contact a) of the material takes place with a gaseous mixture comprising dinitrogen, in particular a gaseous mixture comprising air.

3. The process as claimed in claim 2, in which said gaseous mixture also comprises a gas chosen from dioxygen, carbon dioxide, dihydrogen, helium, neon, argon, krypton, xenon and water vapor, and mixtures thereof.

4. The process as claimed in one of claims 1 to 3, in which the placing in contact a) of the material takes place with:
- a gaseous mixture comprising helium and air; or
- a gaseous mixture comprising air and water vapor, in particular saturated water vapor.

5. The process as claimed in one of claims 1 to 4, in which said set of carbon atoms in the sp² hybridization state is chosen from graphene, graphite, carbon nanotubes, fullerenes and fullerites, said set in particular being graphene or graphite.

6. The process as claimed in one of claims 1 to 5, in which said set of carbon atoms in the sp2 hybridization state is supported on a substrate, chosen especially from metals, in particular Ni, semiconductors and insulators, in particular SiO₂, glasses and polymers.

7. The process as claimed in one of claims 1 to 6, in which said set of carbon atoms in the sp² hybridization state is in powder form.

8. The process as claimed in one of claims 1 to 7, in which said beam is an electron beam.

9. The process as claimed in claim 8, in which the electrons have an energy ranging from 0.1 to 10 MeV, in particular from 0.4 to 2.5 MeV, more particularly from 1.0 to 2.5 MeV,
said set of carbon atoms in the sp² hybridization state especially being supported on a substrate.

10. The process as claimed in claim 8, in which the electrons have an energy ranging from 2.5 to 10 MeV,
said set of carbon atoms in the sp² hybridization state especially being supported on a substrate or in powder form.

11. The process as claimed in one of claims 1 to 7, in which said beam is a beam of light ions, chosen especially from H⁺ and He⁺.

12. The process as claimed in claim 11, in which the light ions have an energy ranging from 0.1 MeV to 45 MeV.

13. The process as claimed in one of claims 1 to 12, in which the irradiation time of step b) ranges from 1 minute to 72 hours, in particular from 5 minutes to 15 hours.

14. The process as claimed in one of claims 1 to 13, in which:
- the flux of the electron beam ranges from 3×10¹¹ to 4x10¹³ e-.cm⁻²,s⁻¹, in particular from 14×10¹² to 1.9×10¹³ e-.cm⁻².s⁻¹; or
- the flux of the light ion beam ranges from 3×10⁷ to 6×10¹¹ e-.cm⁻².s⁻¹; and/or
- the fluence of the electron or light-ion beam ranges from 1.8×10⁹ to 10¹⁹ e-.cm⁻² , in particular from 6.7×10¹⁵ to 7.2×10¹⁶ e-.cm⁻².

15. The process as claimed in one of claims 1 to 14, in which, during the irradiation b):
- the beam irradiates the dinitrogen, and then the material comprising a set of carbon atoms in the sp² hybridization state; or
- the beam irradiates the material comprising a set of carbon atoms in the sp² hybridization state, and then the dinitrogen.

16. The process as claimed in one of claims 1 to 15, in which the set of nitrogen-doped carbon atoms in the sp² hybridization state, obtained on conclusion of step b), is also functionalized with carbon-oxygen bonds, in particular carboxyl and/or carbonyl groups.
